(19) Europäisches Patentamt
European Patent Office
Office européen des brevets

(11) EP 3 339 502 B1

(12) EUROPEAN PATENT SPECIFICATION

(45) Date of publication and mention of the grant of the patent:
**12.02.2020 Bulletin 2020/07**

(51) Int Cl.:
***D06P 5/30*** (2006.01) ***D06P 1/44*** (2006.01)
***D06P 1/52*** (2006.01)

(21) Application number: **16205212.0**

(22) Date of filing: **20.12.2016**

(54) **METHOD FOR INK JET TEXTILE PRINTING**

VERFAHREN ZUM TINTENSTRAHLTEXTILDRUCKEN

PROCÉDÉ D'IMPRESSION À JET D'ENCRE SUR TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018 Bulletin 2018/26**

(73) Proprietor: **AGFA NV**
**2640 Mortsel (BE)**

(72) Inventors:
- **Bertels, Ellen**
**2640 Mortsel (BE)**
- **Van Aert, Hubertus**
**2640 Mortsel (BE)**

(56) References cited:
**WO-A1-2015/116028** **WO-A1-2016/018306**
**WO-A1-2016/064810**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 339 502 B1

## Description

### Technical Field

The present invention relates to a method for ink jet textile printing wherein an aqueous pigment ink is jetted on a textile fabric.

### Background Art

Examples of methods that may be used for printing images such as text, pictures or designs onto fabrics such as woven fabrics and nonwoven fabrics include screen printing methods and roller printing methods. More recently, ink jet textile printing methods, in which image processing is conducted using a computer and the image can then be printed without a plate or screen, are attracting considerable attention.

In the ink jet textile printing method, an ink containing a pigment or dye is used. The textile material on which a dye based ink can be printed is limited, the pigment based ink allows printing on various textile materials. Further advantages of pigment based colouring of textile include a high degree of light fastness and the fact that a colorant removal step is unnecessary.

However, pigments have a problem in that the pigments tend to detach after printing, while dyes fix to fibres of a textile material at a molecular level. Textile material used in clothes and other clothing products are frequently washed, and in many cases, the printed portions are rubbed by wearing or using them. Accordingly, in textile printing on fabric such as clothes and other clothing products, ink properties such as washing fastness, abrasion resistance, crock fastness and fixability to the fibres are highly required.

In order to fix the pigment to the fibre of the fabric, a binder component must be added to the ink. However, in the case of an inkjet ink, from the viewpoints of jetting stability, the jetting properties and degree of nozzle blocking due to the residence of the ink in the ink jet head, a large amount of the binder in the ink formulation cannot be used, and therefore the durability relative to washing and friction tends to be unsatisfactory.

Furthermore, the presence of binder in the ink causes film formation on the nozzle plate of ink jet printing machine and hence nozzle clogging may easily occur. Another disadvantage of introducing binders in pigment ink is the limited ink stability on storage due to time-related precipitation and flocculation of the pigment in the ink, induced by the binder.

In order to adhere the binder of the ink to the fibres of the fabric and hence achieve high wash fastness and crock fastness, a heating step at temperatures above 150°C is required. Heating of fabrics above 150°C may adversely affect the properties of the fabric and requires equipment consuming a high amount of energy to obtain these temperatures.

US2012/0236069 discloses an ink jet printing apparatus for discharging onto the fabric a coating solution containing an abrasion resistant hydrophilic resin having a carboxylic group or sulfone group and subsequently discharging an ink having the same resin in a lower content.

EP2641943 discloses an ink jet ink for textile printing wherein a polyurethane resin is included together with an emulsion-type silicone compound. The printing method includes a heating step above 150°C to thermally fix the resin to the cotton fabric. Long-term stability, satisfactory abrasion resistance and flexibility of printed fabric are obtained.

US2010/0214352 discloses an ink for inkjet textile printing comprising a pigment, a water-dispersible urethane resin having a glass transition point within a range from -35 to 10°C.

JP2015163678A discloses an aqueous pigment composition for printing on a porous substrate such as textile which guarantees an improved washing fastness and rubbing resistance of the images on the fabric. The aqueous composition comprises pigment particles containing a urethane resin obtained by reacting polyester polyols, polyols with an ionic or non-ionic group and polyisocyanate. The inks disclosed in JP2015163678A do not comprise a water-soluble organic solvent. Water soluble organic solvents are added to aqueous inks in order to improve storage stability at low temperatures and to prevent poor firing quality or completely plugged nozzles due to water evaporation on inactive uncapped nozzles. The time of inactivity of ink jet nozzles before the decrease of the drop firing quality is called 'decap time' and should be as long as possible.

WO20016 064810 discloses ink composition comprising polyurethane and pigments.

No documents in the prior art disclose a ink jet printing method of cellulose based fabrics such as cotton and mixed cotton with an aqueous pigment resin containing ink which combines a satisfactory storage stability of the ink together with the absence of a heating step, a high resistance to rubbing and a high wash fastness of the printed fabric.

### Summary of invention

It is an objection of the invention to provide a solution for the above stated problems. The object has been

achieved by an ink jet printing method with an aqueous resin containing ink as defined in claim 1.

According to another aspect, the present invention includes a cellulose fibre coated with a polyurethane resin as defined in claim 12.

According to another aspect, the present invention includes a set of a pre-treatment liquid and an ink jet ink composition according to claim 13.

Other features, elements, steps, characteristics and advantages of the present invention will become more apparent from the following detailed description of preferred embodiments of the present invention. Specific embodiments of the invention are also defined in the dependent claims.

## Description of embodiments

### A. Polyurethane resin

The ink jet printing method of the present invention using an aqueous pigmented ink comprising a polyurethane resin which contains an anionic group and a polyalkylene oxide in a side chain of the polyester urethane backbone. Both the anionic group and the polyalkylene oxide increase the dispersibility of the resin in water. The polyester urethane backbone is obtained by reacting a polyester polyol containing aromatic moieties with a polyisocyanate. The polyurethane resin is thus obtained by reacting a polyester polyol, a diol containing a polyether diol, a polyol or amine containing an anionic group and a polyisocyanate.

A.1. Polyester polyol

The polyester polyol used in the reaction to obtain the polyurethane resin of the ink used in the invention, is obtained by reacting an aromatic polycarboxylic acid and a polyol.

The polyester polyol is a resin formed by an esterification reaction or transesterification reaction between at least one aromatic polycarboxylic acid component and at least one polyol component. Specific examples of the aromatic polycarboxylic acid include dibasic acids such as phthalic acid or 1,2 benzenedicarboxylic acid, isophthalic acid, terephthalic acid, 2,6-Naphthalenedicarboxylic acid, 1,4-naphthalenedicarboxylic acid, 1,5-naphthalenedicarboxylic acid; tri- or higher -valent polybasic acids such as trimellitic acid and pyromellitic acid; and acid anhydrides thereof, for example, phthalic anhydride, trimellitic anhydride, pyromellitic anhydride; and the like. Introducing aromatic moieties in the polyester polyol makes the polyurethane resin more hydrophobic and leads to an increased vitrification of the polymer during the drying step of the fabric after printing. Due to this vitrification, the water is expelled which leads to a reduced drying time or required drying temperature. As the aromatic polycarboxylic acid component, one or more dibasic acids selected from the dibasic acids mentioned above, lower alkyl ester compounds of these acids, and acid anhydrides are mainly used. If necessary, a monobasic acid such as benzoic acid, crotonic acid or p-t-butyl benzoic acid; a tri- or higher valent polycarboxylic acid such as trimellitic anhydride, methylcyclohexene tricarboxylic acid or pyromellitic anhydride; or the like can be further used in combination with the polycarboxylic acid component. It is preferred that the polyester is prepared using dicarboxylic acids which give linear polymer chains, in particular 1,4-terephtalic acid copolymers give a better performance regarding colloidal stability in aqueous medium, than phthalic acid anhydride copolymers. Besides terephthalic acids, one could use also other para- or linear substituted polycarboxylic acids to obtain the desired properties such as 2,6-naphthalenedicarboxylic acid or 1,5-naphthalenedicarboxylic acid.

The preferred carboxylic acid is an aromatic dicarboxylic acid such as terephthalic acid and isophthalic acid. The content of aromatic acids within the resin is equal to or higher than 30 mol% and preferably equal to or higher than 50 mol% with respect to the total amount of dicarboxylic acids or anhydrides. Ink jet inks comprising polyurethane resins obtained by reaction of polyesters polyols containing aromatic polycarboxylic acids do show an improved colloidal stability and lead to images with an improved solvent resistance and an improved dry and wet scratch resistance. The good results obtained with terephthalic acids and isophthalic acids has probably to do with obtaining a certain amount of crystallinity of the polyurethane resin or providing linear amorphous chains which contribute more to the desired physical properties such as scratch resistance and solvent resistance. Introducing phthalic acid anhydride or isophthalic acid in terephthalic acid based polyesters reduces the crystallinity or chain end-to-end distance and improves the solubility in organic solvents. For terephthalic acid based polyester polyols, it is preferred to use copolymers of terephthalic acid with isophthalic acid or phthalic acid anhydride, more preferably having at least 20 mol% isophthalic acid or phthalic acid anhydride units. For the same reason polyester polyols with only phthalic acid anhydride are less preferred than copolymers where terephthalic acid is incorporated. Polyester polyols based on only phtalic acid anhydride could be very soluble in the polymerization solvent for the PU preparation, but a dried ink layer or coating will have also a lower solvent resistance. Therefore it is preferred that the aromatic polyester polyol contains between 20 and 80 mol% of terephthalate groups on the basis of the total amount of dicarboxylic acids (or acid anhydrides) in the polyester polyol.

Very suitable polyester polyols containing terephthalic ester units and isophthalic ester units in a ratio of 1:1

mol % are: Dynacoll 7150 supplied by Evonik, Marl, Germany, Vylon 220 from Toyobo, Osaka Japan and Elitel 1401 obtained from Unitika Ltd Dusseldorf Germany.

In order to obtain the desired properties of the polyester polyol and using a high content of terephthalic acid, one could use also a mixture of dicarboxylic acids. For example to reduce the crystallinity one could use a mixture of terephthalic acid and adipic acid. Consequently one could use also polyester polyols based on a mixture of aromatic polycarboxylic acids and aliphatic dicarboxylic acids such as adipic acid, succinic acid, methylcyclohexene tricarboxylic acid, fumaric acid and sebacic acid or anhydrides such as tetrahydrophthalic acid anhydride, hexahydrophtalic acid anhydride, maleic acid anhydride and succinic acid anhydride.

Polyester polyols with a high content of terephthalic acid could have a poor solubility in the preparation solvent (e.g. acetone) for the PU preparation or could have a too high degree of crystallinity in order to get good adhesive properties. In particular this is the case when only non-branched diols are used for the polyester polyol, such as 1,2-ethylene glycol or 1,4-butane diol. When using terephthalic acid based polyester polyols with more than 35 mol% terephthalic acid, one can preferably use a mixture of different non-branched diols (e.g. a mixture of 1,2-ethylene glycol and 1,4-butane diol) or a mixture of a non-branched diol (e.g. ethylene glycol) with a branched diol (e.g. neopentyl glycol). When using mixtures of different diols for the polyester polyol, one could use high terephthalic acid contents, even up to 100 mol% based of the total dicarboxylic acid content.

Specific examples of the polyol component include diols such as ethylene glycol, diethylene glycol, propylene glycol, dipropylene glycol, 1,4-butanediol, neopentyl glycol, 1,5-pentanediol, 3-methyl-1,5-pentanediol, 1,4-hexanediol and 1,6-hexanediol; and tri- or higher-valent polyols such as glycerin, trimethylolethane, trimethylolpropane and pentaerythritol. For the polyol component, diols as mentioned above are mainly used, and if necessary, tri- or higher-valent polyols such as glycerin, trimethylolethane, trimethylolpropane and pentaerythritol can be further used in combination with the diols. Aromatic diols can also be used to increase the content of aromatic moieties in the polyester polyol. Suitable aromatic diols are: p-xylene glycol, 1,5-naphthalenedimethanol, 1,4-naphthalenedimethanol, 4,4'-bis(hydroxymethyl)biphenyl, bis(hydroxyethyl) terephthalate, bis(2-hydroxypropyl) terephthalate, 1,5-naphthalenedicarboxylic acid 1,5-bis(2-hydroxyethyl) ester, 4,4-bis(hydroxymethyl) diphenylmethane, 2,2-bis(4-β-hydroxyethoxyphenyl)propane (diethoxylated bisphenol A) and bis[p-(2-hydroxyethoxy)phenyl]methane.

Preferably diols with a Mw equal to or less than 400 are used together with the polyester polyol. These polyols can be used singly or as mixture of two or more kinds.

A.2. Polyether diol

The polyether diol incorporated in the resin used in the present invention is obtained by addition polymerization of an alkylene oxide with at least one compound having two or more active hydrogen atoms. Examples of this compound include ethylene glycol, diethylene glycol, triethylene glycol, propylene glycol, trimethylene glycol, 1,3-butanediol, 1,4-butanediol, 1,6-hexanediol, glycerol, trimethylolethane and ethylolpropane. Examples of the alkylene oxide include ethylene oxide, propylene oxide, butylene oxide, styrene oxide, epichlorohydrin and tetrahydrofuran. Preferred polyether diols are compounds according to Formula 1.

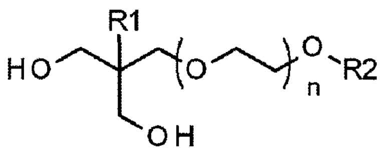

wherein R1 is methyl or ethyl, R2 is H or $C_1$-$C_4$ alkyl and n represents an integer from 5 to 50, more preferably from 10 to 40 and most preferably from 15 to 30.

The polyether diol preferably used in the present invention, is Ymer N120 or Tegomer D 3403, i.e. α-[2,2-bis(hydroxymethyl)butyl]-ω-methoxy-Poly(oxy-1,2-ethanediyl). These diols can be prepared from trimethylol propane oxetane (TMPO). A possible synthesis procedure is described by Fock, J.; Möhring, V., Polyether-1,2- and -1,3-diols as macromonomers for the synthesis of graft copolymers, 1. Synthesis and characterization of the macromonomers. Die Makromolekulare Chemie 1990, 191 (12), 3045-3057.

In general also other polyether 1,2- or 1,3-diols can be used. For a good stability the polyether graft needs to be well water soluble in order to give a good steric stabilisation. In the case of Ymer N120 the polyether is only composed of ethylene oxide segments, but this can also be a copolymer of different alkylene oxides. Polyether diols such as Ymer N120 further improve the compatibility and adhesion of the polyurethane resin to cellulose fibre of the fabric. Cotton is made of cellulosic fibres which contains hydroxyl groups and which can form H-bonds with the polyether diol. The same holds for other fibres having hydroxyl group containing polymers. Furthermore in the current macromonomer diol the end group is a methoxy group, this end group can also be other end groups such as a hydrophilic end group (such as

carboxylic, sulphate, ect.) in order to have also electro-steric stabilisation. The content of the polyether diol in the polyurethane resin is preferably 30 wt.% or less, but more than 1 wt.% with respect to the polyurethane resin, more preferably the polyether diol content is equal to or less than 15 wt.% and more than 2 wt.% with respect to the polyurethane resin. A content of the polyether diol of less than 30 wt.%, but more than 1 wt.% with respect to the polyurethane resin, has an additional improvement in scratch resistance and solvent resistance of the jetted and dried image with respect to polyether diol content outside this range.

A.3. Polyols or amines containing an anionic group

Polyols containing an anionic group and incorporated in the polyurethane resin used in the invention, are polyols containing an anionic group selected from the group of carboxylates, sulfonates, sulphate, phosphonates and phosphates. Preferably, the anionic group is a carboxylate anion and/or carboxylic acid. The ratio carboxylate anion / carboxylic acid depends on the pH of the medium in which the polyurethane resin is dispersed. Examples of the carboxyl-containing polyols such as 2,2'-dimethylolpropionic acid, 2,2'-dimethylol butanoic acid, 2,2'-dimethylolbutyric acid, 2,2'-dimethylol valeric acid and their dicarboxylic variants. It is preferred to use among them 2,2-dimethylol propionic acid. The presence of the anionic group in the polyurethane resin provides water solubility or water dispersibility of the resin. To obtain wet and dry rubbing resistance, the content of the anionic group is preferably equal to or less than 2.0 wt.%, more preferably less than 1.5 wt.%, but more than 0.03 wt.% with respect to the polyurethane resin. A content of anionic group within this range between 0.03 and 2.0 wt.%, has an additional improvement in wet wipe and scratch resistance of the jetted and dried image with respect to anionic group content outside this range.

Besides introducing the anionic groups by means of a polyol containing an anionic group, we can also use amino substituted reagents having an anionic group, e.g. (2-aminoethyl) amino 1-propanesulfonic acid (e.g. EPS supplied by Raschig) or a,w-Polypropylenglycoldiamine-sulfopropylated, Na-salt (available as polyEPS by Raschig) or 2-[(2-aminoethyl)amino]-Ethanesulfonic acid, sodium salt (1:1) (supplied by Evonik as Vestamin A95). By reacting amines also urea linkages are formed in the polyester urethane polymer main chain.

As a basic compound for neutralizing the aforementioned anionic group, ammonia, triethylamine, morpholine, monoethanolamine and diethylethanolamine, 2-amino-2-methyl-1-propanol, NaOH, KOH and LiOH can be used.

A.4. Polyisocyanates

Specific examples of the organic polyisocyanate compound that is reacted with the polyester polyol include aliphatic diisocyanates such as lysine diisocyanate, hexamethylene diisocyanate and trimethylhexane diisocyanate; cyclic aliphatic diisocyanates such as hydrogenated xylene diisocyanate, isophorone diisocyanate, methylcyclohexane-2, 4 (or 2,6)-diisocyanate, 4,4'-methylenebis(cyclohexyl isocyanate) and 1,3-(isocyanatomethyl)cyclohexane; aromatic diisocyanates such as tolylene diisocyanate, xylene diisocyanate and diphenylmethane diisocyanate; organic polyisocyanates themselves, including tri- or higher-valent polyisocyanates such as lysine triisocyanate; adducts each composed of such an organic polyisocyanate with a polyhydric alcohol, a low molecular weight polyester resin or hydrogen; and cyclised polymers (for example, isocyanurate), biuret type adducts and the like, each formed from various diisocyanate compounds mentioned above.

It is preferable, from the viewpoint of storage stability of the ink composition, that the organic polyisocyanate compound according to the invention include at least one selected from non-yellowing type polyisocyanate compounds such as isophorone diisocyanate, hexamethylene diisocyanate and lysine diisocyanate, and it is more preferable that the organic polyisocyanate compound include at least isophorone diisocyanate.

Furthermore, the organic polyisocyanate compounds can be used singly alone or as mixtures of two or more kinds.

A.5. Reaction conditions

In regard to the conditions for the reaction between the polyester polyol, the polyether diol, the polyol or amine containing an anionic group and the organic polyisocyanate compound, those conventionally used reaction conditions can be used without particular limitation.

Besides the preferred terephthalate containing polyester polyols also a mixture of different polymeric polyols can be used to adjust the physical properties, adhesion, flexibility, drying characteristics, crock fastness, etc. Examples are e.g. polycarbonate polyols, polyether polyols, polyacrylate polyols, aliphatic polyester polyols, polyolefin polyols or other polymeric polyols. Examples of polycarbonate polyols are e.g. Oxymer C112, Oxymer M112 (available via Perstorp), Kuraray polyol C-2050, C-2090, C-1090 (available from Kuraray), Converge HMA-1 and Converge HMA-1 (available from Novomer Inc.), Duranol T6002, T6001, T5652, T5651, T5650J, T4672, T4671, T4692 and T4691 (available from Asahi kasei). Additional aliphatic polyester polyols, are e.g. regular (semi)crystalline or amorphous grades, e.g. based

on hexane diol adipates (e.g. Dynacoll 7372 from Evonik) but also polyester polyols based on natural products such as polyester polyols made by using dimer acid or dimer diols (e.g. trade name Priplast from Croda), examples are Priplast 3192 and Priplast 1838. The raw material used to prepare certain Priplast grades, i.e. dimer diols with trade name Pripol can also be used as monomer in the PU synthesis to modify the physical properties and adhesive properties

In the reaction between the polyester polyol and the organic polyisocyanate compound, if necessary, a diol with Mw equal to or less than 400 can be used. Examples of suitable diols are: ethylene glycol, diethylene glycol, propylene glycol, dipropylene glycol, 1,4-butanediol, neopentyl glycol, 1,5-pentanediol, 3-methyl-1,5-pentanediol, 1,4-hexanediol and 1,6-hexanediol; and tri- or higher-valent polyols such as glycerin, trimethylolethane, trimethylolpropane and pentaerythritol. 1,4-butane diol is most preferred.

In the polyurethane synthesis different high molar mass polyols and low molecular weight diols can be reacted, besides the polyether diols used for stabilization of the polyurethane dispersion. In the procedure used the stabilizing polyols and the polyester polyol (Mw > 400 g/mol) are reacted with in excess of isocyanate. This enables a good conversion of the reaction. Depending on the molecular weight and the copolymer composition, the polyester polyol, may have a poor solubility in the reaction solvent (e.g. acetone). Also the polyol with the anionic group has a poor solubility in acetone. After reacting using an excess of isocyanate, the excess is compensated to a NCO/OH molar ratio by addition of a low molecular weight diol, which would lead to a polyurethane resin with very low amount of residual isocyanate. In case some residual isocyanate is present some urea bonds could be formed. Examples of suitable diols are given above.

So in the reaction conditions used a pre-condensation step with NCO/OH-ratio >1 and a chain extension step at NCO/OH-ratio = 1.0 can be distinguished. Instead of using a 2-step process, one could use also a one-step or semi-continuous process. In the 2-step process, when using a high NCO/OH ratio more low molar mass diol (chain extender) is added and the weight ratio of the polyester polyol is reduced. In order to obtain the desired properties, the amount of polyester polyol as compared to low molar mass diols should be considerably higher, i.e. at least 50 wt.%. Surprisingly it was found that upon using high NCO/OH ratios in the pre-condensation step this resulted into polyurethane dispersions with poorer colloidal stability because of more coarse particles leading to an ink jet ink having poorer filterability. Reacting at a higher NCO/OH ratio in the pre-condensation step will lead also to a higher content of urethane units, which are able to form hydrogen bonds. When keeping the type of polyester polyol constant and also the chain extender, reacting at an NCO/OH ratio more close to NCO/OH = 1.0, leads to better colloidal stability and better filtration properties of the formulated ink jet ink. Consequently when the NCO/OH ratio and the amount of urethane bonds play an important role, also the molecular weight of the polyester polyol and the low molar mass diol plays a role. In the most examples only one polyester polyol is used and only one low molar mass diol. When using mixtures of diols one can easily calculate the number average molecular weight which will affect the NCO/OH ratio.

It was found that there was a direct correlation between the filterability and the NCO/OH ratio and consequently the weight ratio of polyester polyol / low molar mass diol. An even better correlation was found when this weight ratio was corrected for the molecular weight of the polyester polyol and the low molar mass diol. As an example the corrected polyol ratio is calculated for 2 polyester polyols which are reacted with the low molar mass diol 1,4-butane diol. First the weight ratio is calculated, defined by the weight of the monomers weighed for the polyurethane synthesis. The correction for the (number average) molar mass of the in the polyol ratio is calculated as follows:

The Corrected polyol ratio = ((number average molecular weight low molar mass diols) x (weight ratio polyester polyol / low molar mass diol)) / (number average molecular weight polymeric polyol).

In the formula for the corrected polyol ratio, all polymeric polyols and low molar mass diols are taken into account except the polyether diol and the polyol containing the anionic group.

The number average molecular weight is calculated from the hydroxyl content, i.e. (2 x 1000) / ((mg KOH/gram)/56.11).

Examples of the organic solvent used for the reaction between the polyester polyol and the organic polyisocyanate compound here include ketones such as acetone and methyl ethyl ketone, ethers such as tetrahydrofuran and dioxane, acetates such as ethyl acetate and butyl acetate, nitriles such as acetonitrile, and amides such as dimethyl formamide, N-methylpyrrolidone and N-ethylpyrrolidone. These may be used singly or in combinations of two or more.

Using higher molecular weight polyols than Ymer120N will give more phase separation, providing a better water dispersibility. However for the making of the polyurethane resin, it is more difficult to dissolve these polyols in de organic solvent, e.g. acetone. This can be overcome by using a co-solvent during the polycondensation reaction. A preferred co-solvent is 2-pyrolidon or N-methylpyrrolidone.

The ink composition of the invention contains the polyurethane resin as an essential component. Therefore,

the polyurethane resin is preferably dispersed in water to obtain an aqueous dispersion of the polyurethane resin. Every dispersing technology suitable for preparing an aqueous dispersion may be used.

The mass ratio of the polyurethane resin to the colorant that will be described later is preferably between 2 and 5. A ratio smaller than 2 results in a decrease of physical properties (dry and wet rub resistance), a ratio higher than 5 results is a decrease of the jetting properties.

## B. Ink jet ink composition

The inkjet ink used in the present invention contains the polyurethane resin as described in §A, and water. A water-soluble organic solvent may additionally be added to the ink formulation. Additional components are given below. The ink jet ink according to the present invention, without a colorant is also suitable as a pre-treatment liquid. When to be used as pre-treatment liquid, a content equal to or lower than 20 wt.% of the polyurethane resin of the invention is incorporated in the ink jet ink formulation. Besides via an ink jetting technique, the pre-treatment liquid can also be applied onto the fabric by means of a coating technique, a spraying technique or a valve-jetting technique. In case these application techniques are used for the pre-treatment liquid, the content of the polyurethane resin in the liquid is equal to or less than 30 wt.%.

### B.1. Colorant

The inkjet ink according to the present invention may contain preferably a colorant. Preferably the colorant is a pigment. As the pigment, any inorganic pigment or organic pigment can be used.

As the inorganic pigment titanium oxide, iron oxide, calcium carbonate, barium sulfate, aluminium hydroxide, Barium Yellow, Cadmium Red, and Chrome Yellow, carbon black can be used. Other suitable inorganic pigments are disclosed in [072-075] from WO2009/053302.

Among them, carbon black (Pigment Black 7) can be preferably used, and examples thereof include carbon blacks available from Cabot Corporation under trademarks Regal, Black Pearls, Elftex, Monarch, Regal, Mogul and Vulcan (for example, Black Pearls 2000, 1400,1300, 1100, 1000, 900, 880, 800, 700 and 570, Black Pearls L, Elftex 8, Monarch 1400, 1300, 1100, 1000, 900, 880, 800 and 700, Mogul L, Regal 330, 400 and 660, and Vulcan P), and SENSIJET BlackSDP100 (SENSIENT), SENSIJET BlackSDP1000 (SENSIENT) and SENSIJET BlackSDP2000 (SENSIENT).

Examples of the organic pigment include azo pigments (including azo lakes, insoluble azo pigments, condensed azo pigments, and chelate azo pigments), polycyclic pigments (for example, phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (for example, basic dye-type chelates and acidic dye-type chelates), nitro pigments, nitroso pigments, and aniline black. Specific examples include C.I.Pigment Yellow I, 3, 12, 13,14, 17, 24, 34, 35, 37,42 (Yellow Iron Oxide), 53, 55, 74, 81, 83, 95, 97, 98, 100, 101, 104, 108, 109, 110, 117, 120, 128, 139, 150, 151, 155, 153, 180, 183, 185 and 213, C.I. Pigment Orange 5, 13, 16, 17, 36, 43 and 51, C.I. Pigment Red I, 2, 3, 5, 17, 22, 23, 31, 38, 48:2, 48:2 (Permanent Red 2B (Ca)), 48:3, 48:4, 49:I, 52:2, 53:I, 57:I (Brilliant Carmine 6B), 60:I, 63:I, 63:2, 64:I, 81, 83, 88, 101 (Rouge), 104, 105, 106, 108 (Cadmium Red), 112, 114, 122 (Quinacridone Magenta), 123, 146, 149, 166, 168, 170, 172, 177, 178, 179, 185, 190, 193, 209, 219 and 254, C.I. Pigment Violet I (Rhodamine Lake), 3, 5:I, 16, 19, 23 and 38, C.I. Pigment Blue I, 2, 15 (Phthalocyanine Blue), 15:I, 15:2, 15:3 (Phthalocyanine Blue), 16, 17:I, 56, 60 and 63; and C.I. Pigment Green I, 4, 7, 8, 10, 17, 18 and 36.

The method for dispersing the pigment in the ink includes a dispersing method by using a surfactant, a dispersing method by using a dispersible resin, a dispersing method by covering the surface of the pigment with a resin, and a method by introducing a hydrophilic functional group to the surface of the pigment to provide a self-dispersible pigment.

The method for dispersing the pigment in the ink can also be done by using the polyurethane resin of the invention as a dispersant. The advantage of this method, is that a better compatibility between the colour pigment and the resin is achieved in the ink, leading to an improved colloidal stability of the inkjet ink.

In particular, a self dispersible pigment is preferably used. The self-dispersible pigment having a hydrophilic functional group, may also contain an anionic functional group. Examples of the anionic functional group include -COOM, $-SO_3M$, $-PO_3HM$, $-PO_3M_2$, $-SO_3NM_2$, -NH, $-C_6H_4-COOM$, $-NH-C_6H_4\ SO_3M$, $-NH-C_6H_4\ PO_3HM$, $-NH-C_6H_4PO_3M_2$, $-NH-C_6H_4CONHM$ and $-NH-C_6H_4-SO_2NHM$ and examples of the counter ion M include an alkali metal ion and a quaternary ammonium ion, but a quaternary ammonium ion is preferable. Examples of suitable self dispersible pigments are self-dispersible pigments from Emerald and from Cabot: Cab-O-Jet 200 (K), Cab-O-Jet 250C, Cab-O-Jet 260M & 265 M, Cab-O-Jet 270 Y, are ionically stabilized, Cab-O-Jet 260 (M), Cab-O-Jet 450C, Cab-O-Jet 470Y, Cab-O-Jet 480V, Cab-O-Jet 400 (CB), Cab-O-Jet 465 M, most of them are modified by a sulfonate group.

Examples of the quaternary ammonium ion include a tetramethyl ammonium ion, a tetraethyl ammonium ion, a tetrapropyl ammonium ion, a tetrabutyl ammonium ion, a tetrapentyl ammonium ion, a benzyltrimethyl ammonium ion,

a benzyltriethyl ammonium ion, and a tetrahexyl ammonium ion. Among them, a tetraethyl ammonium ion, a tetrabutyl ammonium ion, and benzyltrimethyl ammonium ion are preferable, and a tetrabutyl ammonium ion is particularly preferable.

The self dispersible pigment is preferably a modified pigment which can be modified by a carboxylate or sulfonate group. Other possible groups are a bis-phosphonic acid group or a bis-phosphonic acid salt group, or both thereof.

B.2. Water soluble organic solvent

The inkjet ink of the invention contains, besides water as a solvent, also a water-soluble organic solvent. Examples of water-soluble organic solvents include polyhydric alcohols such as diethylene glycol, triethylene glycol, dipropylene glycol, glycerol, 1,3-propanediol, 1,3-butanediol, 1,4-butanediol, 2,2-dimethyl-1, 3-propanediol, 2-methyl-1, 3-propanediol, 1,2-pentanediol, 2,4-pentanediol, 1,5-pentanediol,1,6-hexanediol, 2-ethyl-1, 3-hexanediol, 1,2-hexanediol and 2,5-hexanediol, polyhydric alcohol alkyl ethers such as dipropylene glycol n-propyl ether, tripropylene glycol methyl ether, tripropylene glycol n-propyl ether, propylene glycol phenyl ether, triethylene glycol methyl ether, triethylene glycol methyl ether, triethylene glycol ethyl ether, diethylene glycol n-hexyl ether and ethylene glycol phenyl ether, and nitrogen-containing heterocyclic compounds such as 2-pyrrolidone and N-methylpyrrolidone.

Other preferred water soluble organic solvents include ethylene glycol, propylene glycol, 1,2-butanediol, 2,3-butanediol, 2-methyl-2, 4-pentanediol, dipropylene glycol monomethyl ether, propylene glycol n-butyl ether, propylene glycol t-butyl ether, diethylene glycol methyl ether, ethylene glycol n-propyl ether and ethylene glycol n-butyl ether.

The content of the water-soluble organic solvent, in the aqueous ink jet ink is preferably 20% by mass or more and less than 70% by mass. If the content is less than 20% by mass, reliable jetting might be difficult, due to for instance a viscosity mismatch between ink and head. If the content exceeds 70% by mass, the ink loses its water based, more green character.

The water-soluble organic solvent is preferably a mixture of organic solvents comprising 2-pyrrolidone and 1,2-hexanediol, optionally together with glycerol.

B.3. Humectant

The ink jet ink of the invention may contain at least one humectant to prevent the clogging of nozzles in an inkjet print head, due to its ability to slow down the evaporation rate of the inkjet ink, especially the water in the inkjet printing liquid. The humectant is an organic solvent having a higher boiling point than water.

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is glycerol or a derivative or isomer of 2-pyrolidone.

The humectant is preferably added to the inkjet printing liquid in an amount of 0.1 to 20 wt% based on the total weight of the inkjet printing liquid.

B.4. Surfactant

In the ink used in the present invention, a surfactant may be added in order to ensure wettability onto the fabric. The amount of the surfactant added is preferably from 0 wt.% to 5 wt.% as an active component in the ink. If the amount exceeds 5% by mass, the ink easily foams to cause non-discharge. The surfactant that can be used is not particularly limited as long as it satisfies the above limitation.

While any of an amphoteric surfactant, a non-ionic surfactant, and an anionic surfactant can be used, non-ionic surfactants such as polyoxyethylene alkyl phenyl ether, polyoxyethylene alkyl ester, polyoxyethylene alkylamine, polyoxyethylene alkyl amide, a polyoxyethylene propylene block polymer, sorbitan fatty acid ester, polyoxyethylene sorbitan fatty acid ester and an ethylene oxide adduct of acetylene alcohol are preferably used in terms of a relationship between dispersing stability of the colour material and image quality. In addition, a fluorine-based surfactant and a silicon-based surfactant can be used in combination (or singly) depending on formulation.

Suitable surfactants are siloxane based surfactants such as Tego Twin 4000 from Evonik Industries, Tegowet 270 from Evonik industries, Hydropalat WE3220 from BASF, silane based surfactants such as Silwet HS312 from Momentive and fluor containing surfactants such as: Thetawet FS8150 from Neochem GMBH, Capstone FS3100 from Dupont, Tivida FL2500 from Merck and surfactants from the Dynol, Envirogem & Surfynol series from Air products.

## C. Ink jet recording method

The inkjet recording method of the present invention includes an ink jetting step onto the fabric such as to obtain a printed fabric, followed by a drying step of the printed fabric. Before the ink jetting step, a pre-treatment step of the fabric can be optionally included in the method of the invention. After the drying of the printed fabric, optionally a heating step can be applied.

The ink jet ink of the present invention is suitable for ink jet printing on a fabric which comprises cellulose fibres. The fabric can be made for 100% of cellulose fibres (cotton, rayon, viscose) or from cellulose fibres and at least one fibre material selected from the group of nylon, polyester, acryl, lactate, acetate, silk, wool, hemp, glass and spandex (Elastan).

The ink jetting step is a step of applying a stimulus to the ink constituting the present invention to thereby allow the ink to be ejected, forming an image. An ink ejection unit is a unit for applying a stimulus to the ink constituting the present invention to thereby allow the ink to be ejected, forming an image. The ink ejection unit is not particularly limited, and can be appropriately selected depending on the object. Examples thereof include various recording heads (ink discharge heads), and in particular, one having a head having a plurality of nozzle rows and a sub-tank for accommodating a liquid supplied from a tank for liquid storage to supply the liquid to the head is preferable.

The stimulus can be generated by a stimulus-generating unit, the stimulus is not particularly limited and can be appropriately selected depending on the object, and examples thereof include heat (temperature), pressure, vibration, and light. These may be used singly or in combinations of two or more. Among them, heat and pressure are suitable.

Herein, examples of the stimulus-generating unit include a heating apparatus, a pressurizing apparatus, a piezoelectric element, a vibration-generating apparatus, an ultrasonic wave oscillator, and a light. Specific examples include piezoelectric actuators such as a piezoelectric element, a thermal actuator utilizing a phase transition of liquid due to film boiling using an electro-thermal conversion element such as a heat resistor, a shape memory alloy actuator using a metal phase transition due to change in temperature, and a static actuator using an electrostatic force.

The mode of ejection of the ink is not particularly limited and is different depending on the type of the stimulus, and when the stimulus is "heat", examples of the mode include a method in which heat energy corresponding to a recording signal is applied to the ink in a recording head using a thermal head or the like to thereby allow the ink to generate air bubbles, and the pressure of the air bubbles allows the ink to be discharged and jetted as droplets from a nozzle hole of the recording head. In addition, when the stimulus is "pressure", examples of the mode include a method in which a voltage is applied to a piezoelectric element adhered to a position called pressure chamber located in an ink passage in a recording head, to deflect the piezoelectric element and to decrease the volume of the pressure chamber, discharging and jetting the ink as droplets from a nozzle hole of the recording head.

Among them, preferable is the method in which a voltage is applied to a piezo element to allow the ink for recording to be ejected. Since a piezo system does not generate heat, this is efficient for allowing a resin containing ink to be ejected, and is an effective method that causes less nozzle clogging.

After the ink jetting step, the printed fabric is dried. The drying step can be performed at the air, but preferably by using heat sources; examples include equipment for forced-air heating, radiation heating such as IR-radiation, including NIR- and CIR radiation, conduction heating, high-frequency drying, and microwave drying. The drying step of the fabric is carried at a temperature preferably below 150°C, more preferably below 100°C, most preferably below 80°C.

In an optional heating step after the drying step, the printed and dried fabric is heated. The heating process enables the polyurethane resin contained in the ink composition, to be thermally bonded onto the surface of the cellulose fibre of the fabric and enables water content to be evaporated. The abrasion resistance of printed fabric can be therefore further enhanced.

Examples of the heating process include, but are not limited to, heat press, atmospheric steaming, high-pressure steaming, and THERMOFIX. Any heat source can be used for the heating process; examples include equipment for forced-air heating, radiation heating such as IR-radiation, conduction heating, high-frequency drying, and microwave drying, and these can be used singly or in combinations of two or more. The heating process can be carried out at a preferred temperature in the range of approximately 150 to 200°C.

After the heating process, printed fabric may be washed with water and then dried. In this case, a soaping process may be optionally carried out, in other words, non-fixed pigments may be washed away with a warm soap solution.

Through these step, a recorded matter such as printed fabric can be produced, in which an image is formed on a fabric based on cotton, viscose, rayon or on mixed cotton fabric such as polyester/cotton with the ink composition of the above-mentioned embodiments. Such a recorded matter is free from cracking, an uneven surface profile, and a stain and further exhibits excellent colour development. The ink jet printing method according to the invention has the advantage that the resin used in the ink jet ink already forms a coating onto the fabric without an additional heating step. The recorded matter exhibits satisfactory fixability (adhesion) of the pigment to the fabric, leading to an enhancement in abrasion resistance which results in a high crock fastness.

In another embodiment of the invention, a pre-treatment liquid may be applied to the fabric prior to jetting the

inkjet ink in order to prevent the occurance of ink bleed on the fabric or the penetration of the pigments into the fibres of the fabric. The pre-treatment liquid can be applied to fabric. After this application, the pre-treated fabric may be dried before the jetting step with in ink jet ink takes place. Examples of the application of pre-treatment liquid include, but are not limited to, immersing fabric into the pre-treatment liquid, spraying the pre-treatment liquid onto fabric or jetting the pre-treatment liquid by means of a jetting technique as ink jet, valve jet or the like onto the fabric. The jetting method has the advantage of applying the pre-treatment liquid only onto the areas of the fabric whereupon the image will be jetted with a colorant containing ink. This reduces the amount of pre-treatment liquid to be applied and reduces the required time to perform the tre-treatment of the fabric. Due to the excellent long term stability of the polyurethane resin of the invention, this resin is particularly useful to be incorporated in the pre-treatment liquid.

The pre-treatment liquid preferably comprises a pre-treatment agent which can be a flocculant to agglomerate pigments contained in the ink composition and precipitate the polyurethane resins to form a coating film of ink on fabric. Preferred flocculants are one or more materials selected from organic acids and polyvalent metal compounds. Preferred examples of the organic acids include, but are not limited to, acetic acid, propionic acid, and lactic acid. The pre-treatment agent can also be the polyurethane resin as described in §A. The advantage of such a pre-treatment agent is that the resins of the pre-treatment liquid and the ink are chemically very comparable or even the same which improves their compatibility when the ink is jetted on the pre-treated fabric. An increased compatibility improves further washing fastness and abrasion resistance of the printed image.

Examples of the polyvalent metallic compounds include, but are not limited to, titanium compounds, chromium compounds, copper compounds, cobalt compounds, strontium compounds, barium compounds, iron compounds, aluminium compounds, calcium compounds, magnesium compounds, and salts thereof (polyvalent metal salts). Among these polyvalent metallic compounds, in view of effective agglomeration of pigments, preferred are one or more materials selected from the group consisting of aluminum compounds, calcium compounds, and magnesium compounds, more preferred are at least any one of calcium compounds and magnesium compounds, and further preferred are calcium compounds. Specific examples of the above-mentioned polyvalent metallic compounds include inorganic pigments such as calcium carbonates (e.g., heavy calcium carbonate and precipitated calcium carbonate), chalk, kaolin, calcined clay, talc, calcium nitrate, calcium sulfate, barium sulfate, titanium dioxide, zinc oxide, zinc sulfide, zinc carbonate, aluminium silicate, calcium silicate, magnesium silicate, synthetic silica, aluminum hydroxide, alumina, sericite, white carbon, saponite, calcium montmorillonite, sodium montmorillonite, and bentonite; and organic pigments such as acrylic plastic pigments, polyethylene, and polyureas.

The pre-treatment agent may further contain, in addition to the flocculant, for example, the above-mentioned polyurethane resin, moisturizing agent, penetrant, and water; and a sizing agent. A sizing agent is useful if no sizing treatment has been performed on the warp yarn before the weaving process in the production process of the fabric.

Examples of the sizing agent include, but are not limited to, starches derived from, for instance, maize and wheat; cellulosic materials such as carboxymethyl cellulose and hydroxymethyl cellulose; polysaccharide such as sodium alginate, gum arabic, locust bean gum, tragacant, guar gum, and tamarindus indica seed; proteins such as gelatine and casein; water-soluble naturally occurring polymers such as tannin and lignin; and synthetic water-soluble polymers such as polymers comprising polyvinyl alcohol, polymers comprising polyethylene oxide, polymers formed from acrylic acid monomers, and polymers formed from maleic anhydride monomers. The sizing agent content is preferably not more than 20 mass% relative to the total mass of the pre-treatment agent (100 mass%). At the sizing agent content within such a range, the viscosity of ink can be decreased to an extent which enables application of the ink with a roller and a spray to be desirably carried out.

The pre-treatment agent liquid contains various additives such as a pH adjuster, a reduction inhibitor, a sequestering agent, a defoaming agent and a surfactant.

Fabric to which the pre-treatment liquid has been applied is preferably dried before the ink jetting step. The drying can be performed by a heat treatment within 2 min at preferably 110 to 200°C, more preferably 120 to 180°C. Heating at 110°C or higher enables the pre-treatment agent to be desirably fixed fibres of the fabric. Heating at 200°C or lower can effectively prevent decreases in the quality of fabric and the quality of components of the pre-treatment agent, such as a polymers.

## EXAMPLES

### Measurement Methods

1. Viscosity

The viscosity of the inks was measured at 32°C using a "Robotic Viscometer Type VISCObot" from CAMBRIDGE APPLIED SYSTEMS.

2. Stability

Ink stability was evaluated numerically and visually. If the relative viscosity of the ink increases more than 40% after being stored for 2 weeks at 60°C the ink is called unstable. If the ink solidifies or if phase separation can be seen, the ink is called unstable.

3. Crock fastness

Test images were printed with a Fujifilm Dimatix DMP-2831 using disposable Standard Dimatix 10 pL cartridges that were filled with the ink jet inks of the examples. Prints were done using the Standard Tickle 5 kHz waveform and cartridge settings. After printing on a fabric, the ensemble was dried for 5 min at 60°C and a dry crock test is done according to ISO105-X12. Coloration of the white rubbing cloth is evaluated based on the ΔE from Cielab measurements as shown in Table 1.

**Table 1**

| ΔE | Score |
|---|---|
| $\Delta E \leq 6$ | 1 |
| $6 < \Delta E < 8.5$ | 2 |
| $16.9 \geq \Delta E \geq 8.5$ | 3 |
| $\Delta E \geq 16.5$ | 4 |

4. Filterability

Filterability was evaluated by measuring the time to filter 12 ml (called t2) of ink using a 1 μm Chromafil GF-100/15 filter from Macherey-Nagel.

**Materials**

All materials used in the following examples were readily available from standard sources such as Sigma-Aldrich (Belgium) and Acros (Belgium) unless otherwise specified. The water used was demineralised water.

- **Acetone** is acetone p.a. supplied by VWR International
- **Vylon 220** is a polyester polyol containing terephthalic ester and isophthalic ester units obtained from Toyobo
- **Dynacoll 7150** is a polyester polyol containing terephthalic ester and isophthalic ester units supplied by Evonik
- **Dynacoll 3781** is an aliphatic polyester polyol based on hexane diol and adipic acid obtained from Evonik
- **Ymer N120** is 1,3 diol polyether supplied by Perstorp
- **Elitel XP1402** from Unitika Ltd, Dusseldorf, Germany
- **DBTL** is dibutyl tin laurate (KEVER-KAT DBTL 162) supplied by Brenntag
- **DMPA** is dimethylol propionic acid supplied by Geo Chemicals
- **IPDI** is a Vestanat IPDI, isocyanate supplied by Evonik
- **BD** is 1,4-butane diol supplied by Acros
- **Triethylamine** is triethylamine supplied by Acros
- **PU-x** is an aqueous dispersion of a polyurethane resin
- **COL** is a commercial cyan dispersion supplied by Cabot Corporation, available under the trade name Cab-O-Jet 450C
- **PYR** is 2-pyrrolidone
- **GLYC** is glycerol
- **HD** is 1,2-hexanediol
- **SURF-1** is Capstone FS3100, a surfactant from Dupont
- **SURF-2** is Tego Twin 4000, a surfactant from Evonik Industries
- **SUBST-1** is a cotton fabric (Fine Warp Satin) without special coating from Premier Textiles, UK
- **SUBST-2** is a polyester/cotton fabric (plain) without special coating from Premier Textiles, UK
- **SUBST-3** is a cotton fabric (Fine Warp Satin) with a pigment coating as supplied by Premier Textiles, UK

**Polyurethane resin dispersions**

PU-1

In a 12 litre jacketed reactor equipped with a coiled condenser 2400.81 g of Vylon 220 was added and 3323.1 g of acetone. The reactor was stirred until all polyester polyol was dissolved, during approximately one hour at room temperature. Ymer N120 was heated to 80 °C in order to become liquid. In an Erlenmeyer of 2 litres, 861.52 g of acetone and 352.41 g of Ymer N120 was added. The mixture was stirred using a magnetic stirrer, until a homogeneous solution was obtained. In an Erlenmeyer of 500 ml the catalyst solution was prepared by weighing 23.17 g of DBTL and 208.55 g of Acetone. To the dissolved polyester polyol 50.43 g of DMPA was added. Subsequently the Ymer N120 solution was added. The Erlenmeyer was flushed with 85.4 g of acetone. The catalyst solution was added and also flushed with 85.4 g of acetone. The reaction mixture at room temperature was slightly turbid and heated to 55°C. Upon heating and stirring the reaction mixture becomes clear. As 55°C was reached 609.17 g of IPDI was added drop wise via an addition funnel with pressure equalization arm during 120 minutes. The amount isocyanate added was in excess towards the hydroxyl content, NCO/OH = 1.53. After reacting during 120 minutes at 55°C, 85.58 g of BD **were added.** The reaction mixture was cooled to 45 °C, in order to avoid evaporation of acetone. The reaction mixture was then allowed to react overnight during 20 hour at 44 ° C in order to reach full conversion. After stirring during 20 hours overnight the reaction mixture was heated to 55°C and stirred during 30 minutes. Afterwards the reaction mixture was cooled to room temperature. The concentration was determined by taken 1 g and drying 120 minutes at 70° C. The concentration determined was 43.82%.

The dispersion of the obtained polyurethane resin was made in a stainless steel vessel of 12 litres having a diameter of 22.5 cm. and using Disperlux equipment equipped with a 12.5 cm diameter dissolver stirrer. To the vessel 4000 g of the polyurethane solution in acetone was added. The solution was slowly stirred at 930 r.p.m. and 19.4 g of Triethylamine was added during 5 minutes and stirred during 30 minutes in order to neutralize the carboxylic acid groups of the DMPA units in the polymer. Afterwards 3236.2 g of water was added during 20 minutes. The dissolver stirrer was set at 1965 r.p.m. After the addition of 30% of the water, the rotation speed of the stirrer was reduced to 930 r.p.m. After all the water was added the mixture was stirred for still 5 minutes. The prepared dispersion in acetone/water was added to a 12 litre jacketed Radleys reactor heated at a jacket temperature of 40°C and stirred at 200 r.p.m. The acetone present in the dispersion was distilled off going to a pressure of 60 mBar at a temperature of 36°C. After cooling to room temperature the solids content was determined by taken 1 g and drying at 130°C during 90 minutes. The solids content obtained was 35.86 wt.%. The measured pH was 7.90. The particle size according to a Zetasizer measurement is 136 nm.

PU-2

In a 500 ml 3 necked round bottom flask equipped with a coiled condenser and stirrer, 2.34 g of DMPA was added. The high molar mass polyester polyol was dissolved one day in advance in an Erlenmeyer by adding 201.86 g of acetone to 112.42 g of Vylon 220. This Erlenmeyer was kept at 45°C until a clear solution was obtained. In this reaction no Ymer N120 was used. The dissolved polyester polyol mixture was cooled to room temperature and subsequently added to the DMPA powder present in the 500 ml 3 necked round bottom flask. 1.07 g of DBTL was diluted in 9.67 g of acetone and also added to the polyol mixture. Then the reactor was heated to 54°C during 35 minutes, allowing the DMPA to dissolve. Subsequently the isocyanate was added drop wise via an addition funnel with pressure equalization arm during 20 minutes. For this experiment 43.41 g of IPDI was used. The amount isocyanate added was an excess towards the hydroxyl amount of NCO/OH = 1.53). The reaction was allowed to take place during 2 hours at 54 °C. Afterwards a chain extender was added to compensate for the excess of isocyanate, i.e. 6.10 g BD (NCO/OH = 1). The reaction mixture was cooled to 44 °C, in order to avoid evaporation of acetone. The reaction mixture was then allowed to react overnight during 20 hour at 44 °C s in order to reach full conversion. Then 1.74 g of triethylamine was added to neutralize the carboxylic acid groups and the reaction mixture was heated until 52°C during 30 minutes. When the temperature reaches 52°C, the mixture was cooled to room temperature.

Subsequently the water based dispersion of the obtained polyurethane resin was made using Disperlux equipment adding water during high shear mixing. For the dispersion step 353.57 g of the neutralized solution was put in a stainless steel vessel. Under stirring at 900 r.p.m. using a 9 cm diameter dissolver stirrer 289.67 g of water was added during 20 minutes. The acetone in the obtained dispersion was evaporated on a rotary evaporator. In order to avoid foaming the evaporation was started at a lower vacuum level. The evaporation was stopped when also water was evaporating at a pressure of 60 mbar and a 40°C heating bath. Based on the weight the concentration was corrected by adding water to 35%. Upon collecting the product in a flask and allowing it to stand for some time, it was noticed that the product was not stable and showed severe coagulation. The product could therefore not be used for ink formulations.

PU-3

For the polyester urethane synthesis a 500 ml 3 necked round bottom flask equipped with a coiled condenser and stirrer was used. For this reaction no DMPA was used. The high molar mass polyester polyol was dissolved one day in advance in an Erlenmeyer by adding 201.86 g of acetone to 117.40 g of Vylon 220. This Erlenmeyer was kept at 45 C until a clear solution was obtained. 17.23 g of Ymer N120 was heated to 80 °C in order to become liquid and was added to the polyol solution. Then the mixture of polyols (Ymer + polyester polyol) was cooled to room temperature. The polyol mixture was subsequently added to the 500 ml 3 necked round bottom flask. 1.07 g of DBTL was diluted in 9.67 g of acetone and also added to the polyol mixture. Then the reactor was heated to 54 °C during 35 minutes. Subsequently the isocyanate was added drop wise via an addition funnel with pressure equalization arm during 20 minutes. For this experiment 23.54 g of IPDI was used. The amount isocyanate added was an excess towards the hydroxyl amount, i.e. NCO/OH = 1.53. The reaction was allowed to take place during 2 hours at 54 °C. Afterwards 3.31 g of BD as a chain extender was added to compensate for the excess of isocyanate (NCO/OH = 1). The reaction mixture was cooled to 44 °C, in order to avoid evaporation of acetone. The reaction mixture was then allowed to react overnight during 20 hour at 44 ° C s in order to reach full conversion. No triethylamine was added since no DMPA was used.

Subsequently the water based dispersion of the obtained polyurethane resin was made the same way as described for PU-2, but with 337.24 g of the reaction mixture containing the obtained polyurethane resin and 272.13 g of water. The exact solid content was determined by drying 1 gram of solution on an aluminium dish at 130 °C during 120 minutes. The solid content obtained was 35.88 wt.%. The pH is 6.57. The particle size according to a Zetasizer measurement is 176 nm.

PU-4

In a 500 ml 3 necked round bottom flask equipped with a coiled condenser and stirrer, 2.34 g of DMPA was added. The high molar mass polyester polyol was dissolved one day in advance in an Erlenmeyer by adding 201.45 g of acetone to 51.67 g of Vylon 220. This Erlenmeyer was kept at 45°C until a clear solution was obtained. 67.80 g Ymer N120 was heated to 80°C in order to become liquid and added warm to the polyol solution. Then the mixture of polyols (Ymer + polyester polyol) was cooled to room temperature. The polyol mixture was subsequently added to the DMPA powder present in the 500 ml 3 necked round bottom flask. 1.07 g of DBTL was diluted in 9.67 g of acetone and also added to the polyol mixture. Then the reactor was heated to 54°C during 35 minutes, allowing the DMPA to dissolve. Subsequently the isocyanate was added drop wise via an addition funnel with pressure equalization arm during 60 minutes. For this experiment 25.89 g of IPDI was used. The amount isocyanate added was an excess towards the hydroxyl amount, i.e. NCO/OH = 1.53. The reaction was allowed to take place during 2 hours at 54 °C. Afterwards 5.11 g of BD as a chain extender was added to compensate for the excess of isocyanate (NCO/OH = 1). The reaction mixture was cooled to 44 °C, in order to avoid evaporation of acetone. The reaction mixture was then allowed to react overnight during 20 hour at 44 °C s in order to reach full conversion. Then 1.74 g of triethylamine was added to neutralize the carboxylic acid groups and the reaction mixture was heated until 52°C during 30 minutes. When the temperature reaches 52°C, the mixture was cooled to room temperature.

Subsequently the dispersion of the obtained polyurethane resin was made the same way as described for PU-2, but with 339.54 g of the reaction mixture containing the obtained polyurethane resin and 277.39 g of water. The exact solid content was is determined the same way as for PU-3. The solid content obtained was 35.92 wt.%. The measure pH was 7.32. The particle size according to a Zetasizer measurement shows a bimodal distribution: 34 nm (81.6%) and 330 nm (14.3%).

PU-5

The polyurethane resin to be prepared for the aqueous dispersion PU-5 is obtained the same way as described in PU-4, but with 14.38 g of DMPA, 79.67 of Vylon 220 and 11.69 g of Ymer N120. The isocyanate was added drop wise via an addition funnel with pressure equalization arm during 30 minutes instead of 60 minutes. The amount isocyanate added was an excess towards the hydroxyl amount, i.e. NCO/OH = 1.53. 7.36 g of BD as a chain extender was used to compensate for the excess of isocyanate (NCO/OH = 1) and 10.85 g of triethylamine was used to neutralize the carboxylic acid groups.

Subsequently the dispersion of the obtained polyurethane resin was made the same way as described for PU-2, but with 358.56 g of the reaction mixture containing the obtained polyurethane resin and 303.79 g of water. The exact solid content was is determined the same way as for PU-3. The solid content obtained was 35.18 wt.%. The measured pH was 7.79. The particle size according to a Zetasizer measurement shows a bimodal distribution: 25 nm (95.4%) and 4652 nm (4.6%).

PU-6

The polyurethane resin to be prepared for the aqueous dispersion PU-6 is obtained the same way as described in PU-4, but with 2.34 g of DMPA, 120.63 of Vylon 220, 8.25 g of Ymer N120 and 26.96 g of IPDI. The isocyanate was added drop wise via an addition funnel with pressure equalization arm during 20 minutes instead of 60 minutes. The amount isocyanate added was an excess towards the hydroxyl amount, i.e. NCO/OH = 1.53. 3.79 g of BD as a chain extender was used to compensate for the excess of isocyanate (NCO/OH = 1) and 1.75 g of triethylamine was used to neutralize the carboxylic acid groups.

Subsequently the dispersion of the obtained polyurethane resin was made the same way as described for PU-2, but with 349.31 g of the reaction mixture containing the obtained polyurethane resin and 284.07 g of water. The exact solid content was is determined the same way as for PU-3. The solid content obtained was 34.83 wt.%. The measured pH was 7.90. The particle size according to a Zetasizer measurement is 245 nm.

PU-7

The polyurethane resin to be prepared for the aqueous dispersion PU-7 is obtained the same way as described in PU-4, but with 2.34 g of DMPA, 125.38 g of Vylon 220, 4.14 g of Ymer N120 and 26.31 g of IPDI. The isocyanate was added drop wise via an addition funnel with pressure equalization arm during 20 minutes instead of 60 minutes. The amount isocyanate added was an excess towards the hydroxyl amount, i.e. NCO/OH = 1.53. 3.79 g of BD as a chain extender was used to compensate for the excess of isocyanate (NCO/OH = 1) and 1.76 g of triethylamine was used to neutralize the carboxylic acid groups.

Subsequently the dispersion of the obtained polyurethane resin was made the same way as described for PU-2, but with 346.51 g of the reaction mixture containing the obtained polyurethane resin and 281.72 g of water. The exact solid content was is determined the same way as for PU-3. The solid content obtained was 37.77 wt.%. The measured pH was 7.79. The particle size according to a Zetasizer measurement shows a bimodal distribution: 488 nm (94%) and 94 nm (6%).

PU-8

The polyurethane resin to be prepared for the aqueous dispersion PU-8 is obtained the same way as described in PU-4, but with 2.34 g of DMPA, 116.37 g of Dynacoll 7381 instead of Vylon 220, 17.08 g of Ymer N120 and 22.38 g of IPDI. The isocyanate was added drop wise via an addition funnel with pressure equalization arm during 20 minutes instead of 60 minutes. The amount isocyanate added was an excess towards the hydroxyl amount, i.e. NCO/OH = 1.53. 3.14 g of BD as a chain extender was used to compensate for the excess of isocyanate (NCO/OH = 1) and 1.75 g of triethylamine was used to neutralize the carboxylic acid groups.

Subsequently the dispersion of the obtained polyurethane resin was made the same way as described for PU-2, but with 340.74 g of the reaction mixture containing the obtained polyurethane resin and 276.5 g of water. The exact solid content was is determined the same way as for PU-3. The solid content obtained was 35.11 wt.%. The measured pH was 7.62. The particle size according to a Zetasizer measurement is 104 nm.

PU-9

The polyurethane resin to be prepared for the aqueous dispersion PU-9 is obtained the same way as described in PU-4, but with 2.34 g of DMPA, 113.3 g of Dynacoll 7150 instead of Vylon 220 and 16.63 g of Ymer N120. The isocyanate was added drop wise via an addition funnel with pressure equalization arm during 20 minutes instead of 60 minutes. The amount isocyanate added was an excess towards the hydroxyl amount, i.e. NCO/OH = 1.53. 3.64 g of BD as a chain extender was used to compensate for the excess of isocyanate (NCO/OH = 1) and 1.76 g of triethylamine was used to neutralize the carboxylic acid groups.

Subsequently the dispersion of the obtained polyurethane resin was made the same way as described for PU-2, but with 347.0 g of the reaction mixture containing the obtained polyurethane resin and 281.95 g of water. The exact solid content was is determined the same way as for PU-3. The solid content obtained was 35.87 wt.%. The measured pH was 7.82. The particle size according to a Zetasizer measurement is 131 nm.

PU-10

The polyurethane resin to be prepared for the aqueous dispersion PU-10 is obtained the same way as described in PU-4, but with 125.48 g of Elitel XP1402, 18.42 g of Ymer N120 and 11.93 g of IPDI. The isocyanate was added drop wise via an addition funnel with pressure equalization arm during 20 minutes instead of 60 minutes. The amount isocyanate

added was an excess towards the hydroxyl amount, i.e. NCO/OH = 1.05. 0.23 g of BD as a chain extender was used to compensate for the excess of isocyanate (NCO/OH = 1) and 1.76 g of triethylamine was used to neutralize the carboxylic acid groups.

Subsequently the dispersion of the obtained polyurethane resin was made the same way as described for PU-2, but with 338.02 g of the reaction mixture containing the obtained polyurethane resin and 271.53 g of water. The exact solid content was is determined the same way as for PU-3. The solid content obtained was 35.53 wt.%. The measured pH was 7.63. The particle size according to a Zetasizer measurement: 118 nm.

PU-11

The polyurethane resin to be prepared for the aqueous dispersion PU-11 is obtained the same way as described in PU-4, but with 121.07 g of Elitel XP1402, 17.77 g of Ymer N120 and 16.99 g of IPDI. The isocyanate was added drop wise via an addition funnel with pressure equalization arm during 20 minutes instead of 60 minutes. The amount isocyanate added was an excess towards the hydroxyl amount, i.e. NCO/OH = 1.53. 1.46 g of BD as a chain extender was used to compensate for the excess of isocyanate (NCO/OH = 1) and 1.74 g of triethylamine was used to neutralize the carboxylic acid groups.

Subsequently the dispersion of the obtained polyurethane resin was made the same way as described for PU-2, but with 334.92 g of the reaction mixture containing the obtained polyurethane resin and 271.07 g of water. The exact solid content was is determined the same way as for PU-3. The solid content obtained was 36.76 wt.%. The measured pH was 7.40. The particle size according to a Zetasizer measurement: 130 nm.

PU-12

The polyurethane resin to be prepared for the aqueous dispersion PU-12 is obtained the same way as described in PU-4, but with 111.55 g of Elitel XP1402, 16.37 g of Ymer N120 and 27.91 g of IPDI. The isocyanate was added drop wise via an addition funnel with pressure equalization arm during 20 minutes instead of 60 minutes. The amount isocyanate added was an excess towards the hydroxyl amount, i.e. NCO/OH = 2.56. 7.05 g of BD as a chain extender was used to compensate for the excess of isocyanate (NCO/OH = 1) and 1.75 g of triethylamine was used to neutralize the carboxylic acid groups.

Subsequently the dispersion of the obtained polyurethane resin was made the same way as described for PU-2, but with 343.90 g of the reaction mixture containing the obtained polyurethane resin and 282.76 g of water. The exact solid content was is determined the same way as for PU-3. The solid content obtained was 34.91 wt.%. The measured pH was 5.82. The particle size according to a Zetasizer measurement: 138 nm.

## Example 1

This example illustrates the need for a polyurethane obtained by reacting a polyester polyol, a polyether diol and a polyol containing an anionic group in order to assure sufficient ink stability used in the method of the invention. The presence of a polyether diol and a polyol containing an anionic group during the reaction implies that these compounds are built in the PU-resin.

Preparation of Cyan Inkjet inks for textile printing

Table 2 shows the content of the anionic group and the content of the polyether diol in the polyurethane resin. Both compounds are incorporated to assure the stabilization of the resins in the ink jet ink, more particularly in the Cyan inks. Polyurethane resin dispersions, PU-1 to PU-7 are based on polyurethane resins obtained with the same polyester polyol Vylon 220, PU-9 is based on a polyol having a larger molar mass Dynacoll 7150. PU 1, PU-4 to PU-7 and PU-9 are PU resins which were obtained by reacting a polyester polyol, obtained by reacting an aromatic polycarboxylic acid and a polyol with a polyether diol, a polyol containing an anionic group and a polyisocyanate.

**Table 2**

| PU resin dispersion | INV/COMP | Content of the anionic group ($COO^-$) (wt.%) | Content of the polyether diol (wt.%) |
|---|---|---|---|
| PU-1 | INV | 0.47 | 10.07 |
| PU-2 | COMP | 0.47 | 0 |
| PU-3 | COMP | 0 | 10.67 |

(continued)

| PU resin dispersion | INV/COMP | Content of the anionic group ($COO^-$) (wt.%) | Content of the polyether diol (wt.%) |
|---|---|---|---|
| PU-4 | INV | 0.47 | 40.52 |
| PU-5 | INV | 2.85 | 7.06 |
| PU-6 | INV | 0.47 | 5.09 |
| PU-7 | INV | 0.48 | 2.56 |
| PU-8 | COMP | 0.48 | 10.28 |
| PU-9 | INV | 0.48 | 10.59 |

Eight cyan inkjet inks were prepared by mixing the compounds given in Table 3 and using the PU-resin dispersions PU-1 to PU-7 and PU-9 from Table 2. All weight percentages are relative to the total weight of the inkjet ink. The amount of the PU-resin dispersions was chosen in such a way to achieve a content of 12.0 wt.% of the solid PU-resin.

**Table 3**

| Compound | Content in wt. % |
|---|---|
| PU-resin | 12.0 |
| SURF-1 | 0.8 |
| PYR | 20.0 |
| HD | 20.0 |
| COL-1 | 20.0 |
| Water | To complete to 100% |

Inks with different PU-resin compositions were evaluated for stability and the coatings obtained by drying these inks were evaluated for scratch resistance and solvent resistance. From Table 4 it can be seen that Cyan inkjet inks C-1 to C-7 and C-9 containing PU-resins obtained by reacting a polyester polyol, a polyether diol and a polyol containing an anionic group (hence having a steric stabilization and an electric stabilization), in accordance with the invention, were capable of delivering stable inks. The absence of a polyether diol or a polyol containing an anionic group in the reaction of the polyester polyol, and the polyisocyanate, resulted in an unstable ink.

**Table 4**

| Cyan ink jet Ink | PU-resin dispersion | Ink stability |
|---|---|---|
| C-1 | PU-1 | OK |
| C-2 | PU-2 | Unstable PU-dispersion |
| C-3 | PU-3 | Unstable |
| C-4 | PU-4 | OK |
| C-5 | PU-5 | OK |
| C-6 | PU-6 | OK |
| C-7 | PU-7 | OK |
| C-9 | PU-9 | OK |

## Example 2

This example illustrates the need for an aromatic moiety in the resin, obtained by using a polyester polyol obtained by reacting an aromatic polycarboxylic acid and a polyol in the preparation of the PU-resin in order to obtain stable ink jet ink formulations.

Preparation of Cyan Inkjet inks

Cyan inkjet ink C-8 was prepared according to Table 5 with the same compounds as the ink C-1 (see Example 1), but with PU-8 as the PU-resin dispersion. PU-8 is a dispersion of a polyurethane resin based on the polyester polyol Dynacoll 7381 having an aliphatic backbone and a hydroxyl number of 33.4 mg KOH/g, whereas PU-9 has an aromatic backbone and a hydroxyl number of 38-45 mg KOH/g.

Evaluation and Results

Cyan inkjet inks C-8 and C-9 were evaluated for ink stability. From Table 5 it can be seen that the absence of an aromatic moiety in the polyurethane resin of PU-8 causes stability issues. C-8 became solid, briefly after the preparation of the ink. Cyan inkjet ink C-9 had a good stability.

**Table 5**

| Cyan inkjet Ink | PU-resin dispersion | Ink stability |
|---|---|---|
| C-8 | PU-8 | Only stable during preparation and coating |
| C-9 | PU-9 | OK |

## Example 3

This example illustrates the influence of the polyester polyol / diol ratio in the polyurethane resins of the invention on the filterability of the ink containing these resins. The calculated Number average molecular weight for Elitel XP1402 is 8015.7 g/mol, based on the OH-content of 14 mg KOH/g). The Corrected polyol ratios for the polyurethane resins PU-10, PU-11, PU-12 having a NCO/OH ratio of 1.05, 1.53, 2.65 respectively is, based on the calculation as described in the description given in Table 6.

Preparation of cyan Inkjet inks

Cyan inks C-10, C-11 and C-12 were prepared according to the formulation of Table 4, using polyurethane resin dispersions PU-10, PU-11, PU-12 as shown in Table 6.

Evaluation and Results

Filterability, measured as time to filter t2 of the cyan inks C-10, C-11 and C-12 are displayed in Table 6. It is clear from the table that a Corrected polyol ratio above a value of 0.2, positively influences the filterability of the ink jet ink.

**Table 6**

| Ink | PU resin dispersion | NCO/OH ratio | Corrected polyol ratio | t2 (s) |
|---|---|---|---|---|
| C-10 | PU-10 | 1.05 | 6.36 | 93 |
| C-11 | PU-11 | 1.53 | 0.59 | 85 |
| C-12 | PU-12 | 2.65 | 0.19 | > 300 |

## Example 4

This example illustrates the advantage of the ink jet printing method using a polyurethane resin in the pigment ink to print onto fabrics containing cotton and mixed cotton fibres.

Preparation of Cyan Inkjet inks

Five cyan inkjet inks were prepared by mixing the compounds given in Table 7. Formulation C-13 does not contain any resin, formulation C-14 to C-17 do contain the aqueous resin dispersion PU-9. Formulations C-14 to C-15 do contain glycerol, as do most pigment inks, while formulations C-16 & 17 do not contain any glycerol.
All weight percentages are relative to the total weight of the inkjet ink.

**Table 7**

| | C-13 | C-14 | C-15 | C-16 | C-17 |
|---|---|---|---|---|---|
| Compound | Content in wt. % | Content in wt. % | Content in wt. % | Content in wt. % | Content in wt. % |
| PU-resin PU-9 | 0 | 4 | 6 | 6 | 8 |
| SURF-1 | 0.6 | 0.6 | 0.6 | 0.6 | 0.6 |
| SURF-2 | 0.2 | 0.2 | 0.2 | 0.2 | 0.2 |
| PYR | 20.0 | 20 | 20 | 20 | 20 |
| HD | 20 | 20 | 20 | 20 | 20 |
| GLYC | 10 | 10 | 10 | - | - |
| COL | 20.0 | 20 | 20 | 20 | 20 |
| Water | To complete to 100% | To complete to 100% | To complete to 100% | To complete to 100% | To complete to 100% |

Evaluation and Results

All inks were stable. The cyan inks with different PU-resin content were printed on three different fabrics SUBST-1, SUBST-2 and SUBST-3 and dried at 60°C for 5 minutes. The dried and printed fabrics were evaluated on crock fastness. From Table 8 it can be seen that Cyan inkjet ink C-13 always causes inferior crock fastness of the fabric due to the absence of the polyurethane resin. When increasing the resin load, crock fastness improves significantly. The skilled in the art will appreciate further the fact that these satisfactory results were obtained without an additional heating step of the printed and dried fabric.

**Table 8**

| Ink | C-13 | C-14 | C-15 | C-16 | C-17 |
|---|---|---|---|---|---|
| Resin content | 0% | 4% | 6% | 6% | 8% |
| GLYC | Yes | Yes | Yes | No | No |
| Crock fastness on SUBST-1 | 4 | 4 | 3 | 3 | 1 |
| Crock fastness on SUBST-2 | 4 | 2 | 1 | 2 | 1 |
| Crock fastness on SUBST-3 | 4 | 3 | 3 | 2 | 3 |

**Claims**

1. An ink jet printing method comprising the jetting of an aqueous ink jet ink onto a fabric containing cellulose fibres followed by a drying step, the ink jet ink comprises a polyurethane resin having an anionic group and a polyalkylene oxide in a side chain thereof, wherein the polyurethane resin is obtained by reacting a polyester polyol, a polyether diol, a polyol or amine containing an anionic group and a polyisocyanate, and wherein the polyester polyol is obtained by reacting an aromatic polycarboxylic acid and a polyol.

2. The ink jet printing method according to claim 1 wherein the ink jet ink further comprises a pigment.

3. The ink jet printing method according to claim 1 or 2 wherein the aromatic polycarboxylic acid is selected from the group consisting of phthalic acid, terephthalic acid, isophthalic acid and phthalic acid anhydride.

4. The ink jet printing method according to any of the preceding claims wherein the Corrected polyol ratio of the polyurethane resin is higher than 0.2.

5. The ink jet printing method according to any of the preceding claims wherein a pre-treatment liquid is applied to the

fabric prior to the jetting of the ink.

6. The ink jet printing method according to claim 5 wherein the pre-treatment liquid comprises a flocculant.

7. The ink jet printing method according to claims 5 to 6 wherein the pre-treatment liquid is applied by means of an ink jet printing method.

8. The ink jet printing method according to claims 5 to 7 wherein, the pre-treatment liquid is dried prior to the jetting of the ink.

9. The ink jet printing method according to claims 5 to 8 wherein the pre-treatment liquid comprises the polyurethane resin as defined in claim 1.

10. The ink jet printing method according to any of the preceding claims wherein after the drying step, a heating step is carried out at a temperature of 150°C or higher.

11. The ink jet printing method according to any of the preceding claims wherein the fabric contains cellulose and polyester fibres.

12. A cellulose fibre comprising a coating containing the polyurethane resin as defined in claim 1.

13. A set of a pre-treatment liquid and an ink jet ink for textile printing composed of a pre-treatment liquid comprising a flocculant and an ink jet ink comprising water, the polyurethane resin as defined in claim 1 and a pigment.

14. The set according to claim 13 wherein the ink comprises a water soluble organic solvent.

15. The set according to claims 13 and 14 wherein the aromatic polycarboxylic acid is selected from the group consisting of phthalic acid, terephthalic acid and isophthalic acid.

## Patentansprüche

1. Ein Tintenstrahldruckverfahren, umfassend das Aufspritzen einer wässrigen Tintenstrahltinte auf ein Cellulosefasern enthaltendes Gewebe und einen anschließenden Trocknungsschritt, wobei die Tintenstrahltinte ein Polyurethanharz mit einer anionischen Gruppe und einem Polyalkylenoxid in einer Seitenkette derselben enthält, wobei das Polyurethanharz durch Reagieren eines Polyesterpolyols, eines Polyetherdiols, eines Polyols oder Amins mit einer anionischen Gruppe und eines Polyisocyanats erhalten wird, und wobei das Polyesterpolyol durch Reagieren einer aromatischen Polycarbonsäure und eines Polyols erhalten wird.

2. Das Tintenstrahldruckverfahren nach Anspruch 1, wobei die Tintenstrahltinte ferner ein Pigment enthält.

3. Das Tintenstrahldruckverfahren nach Anspruch 1 oder 2, wobei die aromatische Polycarbonsäure aus der Gruppe bestehend aus Phthalsäure, Terephthalsäure, Isophthalsäure und Phthalsäureanhydrid gewählt wird.

4. Das Tintenstrahldruckverfahren nach einem der vorstehenden Ansprüche, wobei das korrigierte Polyolverhältnis des Polyurethanharzes bei mehr als 0,2 liegt.

5. Das Tintenstrahldruckverfahren nach einem der vorstehenden Ansprüche, wobei vor dem Aufspritzen der Tinte eine Vorbehandlungsflüssigkeit auf das Gewebe angebracht wird.

6. Das Tintenstrahldruckverfahren nach Anspruch 5, wobei die Vorbehandlungsflüssigkeit ein Ausflockungsmittel enthält.

7. Das Tintenstrahldruckverfahren nach den Ansprüchen 5 bis 6, wobei die Vorbehandlungsflüssigkeit mittels eines Tintenstrahldruckverfahrens aufgetragen wird.

8. Das Tintenstrahldruckverfahren nach den Ansprüchen 5 bis 7, wobei die Vorbehandlungsflüssigkeit vor dem Aufspritzen der Tinte getrocknet wird.

**9.** Das Tintenstrahldruckverfahren nach den Ansprüchen 5 bis 8, wobei die Vorbehandlungsflüssigkeit das wie in Anspruch 1 definierte Polyurethanharz enthält.

**10.** Das Tintenstrahldruckverfahren nach einem der vorstehenden Ansprüche, wobei anschließend an den Trocknungsschritt ein Erwärmungsschritt bei einer Temperatur von mindestens 150°C vorgenommen wird.

**11.** Das Tintenstrahldruckverfahren nach einem der vorstehenden Ansprüche, wobei das Gewebe Cellulose- und Polyesterfasern enthält.

**12.** Eine Cellulosefaser, umfassend eine Beschichtung, die das wie in Anspruch 1 definierte Polyurethanharz enthält.

**13.** Ein Satz einer Vorbehandlungsflüssigkeit und einer Tintenstrahltinte für Textildruck, bestehend aus einer ein Ausflockungsmittel enthaltenden Vorbehandlungsflüssigkeit und einer Wasser, das wie in Anspruch 1 definierte Polyurethanharz und ein Pigment enthaltenden Tintenstrahltinte.

**14.** Der Satz nach Anspruch 13, wobei die Tinte ein wasserlösliches organisches Lösungsmittel enthält.

**15.** Der Satz nach den Ansprüchen 13 und 14, wobei die aromatische Polycarbonsäure aus der Gruppe bestehend aus Phthalsäure, Terephthalsäure und Isophthalsäure gewählt wird.

## Revendications

**1.** Procédé d'impression à jet d'encre comprenant l'étape consistant à projeter une encre pour impression à jet d'encre aqueuse sur un tissu contenant des fibres de cellulose et une étape de séchage subséquente, ladite encre pour impression à jet d'encre contenant une résine de polyuréthane comprenant un group anionique et un oxyde de polyalkylène dans une chaîne latérale de celui-ci, ladite résine de polyuréthane étant obtenue en faisant réagir un polyol de polyester, un diol de polyéther, un polyol ou une amine comprenant un groupe anionique et un polyisocyanate, et ledit polyol de polyester étant obtenu en faisant réagir un acide polycarboxylique aromatique et un polyol.

**2.** Procédé d'impression à jet d'encre selon la revendication 1, **caractérisé en ce que** l'encre pour impression à jet d'encre contient en outre un pigment.

**3.** Procédé d'impression à jet d'encre selon la revendication 1 ou 2, **caractérisé en ce que** l'acide polycarboxylique aromatique est choisi parmi le groupe composé d'acide phtalique, d'acide téréphtalique, d'acide isophtalique et d'anhydride phtalique.

**4.** Procédé d'impression à jet d'encre selon l'une quelconque des revendications précédentes, **caractérisé en ce que** le rapport de polyol corrigé de la résine de polyuréthane est supérieur à 0,2.

**5.** Procédé d'impression à jet d'encre selon l'une quelconque des revendications précédentes, **caractérisé en ce qu'**il est appliqué un liquide de prétraitement sur le tissu avant de projeter l'encre.

**6.** Procédé d'impression à jet d'encre selon la revendication 5, **caractérisé en ce que** le liquide de prétraitement contient un floculant.

**7.** Procédé d'impression à jet d'encre selon les revendications 5 à 6, **caractérisé en ce que** le liquide de prétraitement est appliqué à l'aide d'un procédé d'impression à jet d'encre.

**8.** Procédé d'impression à jet d'encre selon les revendications 5 à 7, **caractérisé en ce que** le liquide de prétraitement est séché avant de projeter l'encre.

**9.** Procédé d'impression à jet d'encre selon les revendications 5 à 8, **caractérisé en ce que** le liquide de prétraitement contient la résine de polyuréthane telle que définie selon la revendication 1.

**10.** Procédé d'impression à jet d'encre selon l'une quelconque des revendications précédentes, **caractérisé en ce que** l'étape de séchage est suivie d'une étape de chauffage effectuée à une température d'au moins 150°C.

**11.** Procédé d'impression à jet d'encre selon l'une quelconque des revendications précédentes, **caractérisé en ce que** le tissu contient des fibres de cellulose et de polyester.

**12.** Fibre de cellulose comprenant un revêtement contenant la résine de polyuréthane telle que définie dans la revendication 1.

**13.** Ensemble d'un liquide de prétraitement et d'une encre pour impression à jet d'encre pour l'impression sur textile, composé d'un liquide de prétraitement contenant un floculant et d'une encre pour impression à jet d'encre contenant de l'eau, la résine de polyuréthane telle que définie dans la revendication 1 et un pigment.

**14.** Ensemble selon la revendication 13, **caractérisé en ce que** l'encre contient un solvant organique soluble dans l'eau.

**15.** Ensemble selon les revendications 13 et 14, **caractérisé en ce que** l'acide polycarboxylique aromatique est choisi parmi le groupe composé d'acide phtalique, d'acide téréphtalique et d'acide isophtalique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120236069 A
- EP 2641943 A
- US 20100214352 A
- JP 2015163678 A
- WO 20016064810 A
- WO 2009053302 A


### Non-patent literature cited in the description


- **FOCK, J. ; MÖHRING, V.** Polyether-1,2- and -1,3-diols as macromonomers for the synthesis of graft copolymers, 1. Synthesis and characterization of the macromonomers. *Die Makromolekulare Chemie,* 1990, vol. 191 (12), 3045-3057